# EUROPEAN PATENT APPLICATION

(11) **EP 4 663 081 A1**
(43) Date of publication of application: **17.12.2025**
(21) Application number: 25181593.2
(22) Date of filing: 09.06.2025
(51) Int. Cl.: A47K 3/02, A47K 3/40, B29C 67/24, B32B 5/02, B32B 15/02, B32B 27/08, B32B 27/18, B32B 27/20, B32B 27/30, B32B 27/38

(54) **A COMPOSITE ARTICLE**

(30) Priority: 11.06.2024 GB 202408356
(71) Applicant: Advanced Minerals Limited, Sheffield South Yorkshire S36 2UZ (GB)
(72) Inventor: SALT, Geoffrey, Sheffield, S36 2UZ (GB)
(74) Representative: Appleyard Lees IP LLP

(57) **Abstract**

The present invention relates to a composite article for use as a shower tray comprising a skin and a resin bonded filler matrix, wherein the resin bonded filler matrix comprises a thermoset resin in an amount of up to 10 wt% by total weight of the resin bonded filler matrix.

## Description

### FIELD

The invention relates to a composite article, and in particular to a composite shower tray and a related method to produce said composite article.

### BACKGROUND

Cast stone shower trays have traditionally been made using a gel coated mould and a back mould, and the trays were deeper (around 140mm) and suitable for use with shower curtains. A filled resin is poured in and allowed to flow around the mould space until the base and the walls were level before the catalysed resin set. These cast stone shower trays had delicate moulds which required considerable upkeep because the walls broke easily during transport, and the gel coat finish often resulted in a poor-quality finish. The back of the poured shower tray often having a rough finish. Recently, low-cost shower doors and screens allowed the tray to be made shallower (around 40mm or lower) which reduces transport damage. Shower trays can also be constructed from a vacuum formed ABS capped acrylic skin (also known as an ABS capped acrylic shaping) which is supported by a resin bonded filler matrix. ABS capped acrylic provided an improvement in the strength of the tray and provided a cleaner, less porous finish. The skin generally forms the upper surface of a shower tray and is generally substantially hollow. The resin bonded filler matrix is added into the hollow structure to support and strengthen the skin so that it is fit for use as a shower tray.

Shower trays form the base of a shower and in use the user stands on the shower tray base. The weight of the user is placed onto the skin and is supported by the resin bonded filler matrix. Therefore, shower trays are required to be strong to withstand the weight of a person without damage. Further, shower trays are required to be durable for long term use. Current commercially available shower trays require high amounts of resin to provide the composite articles with the required strength and durability which results in VOCs which can be damaging to the environment and further results in heavy trays that require more energy to transport and can be difficult to install.

It is desirable for shower trays to be more environmentally friendly to produce, while maintaining required properties such as strength and durability.

It is an object of the present invention to prepare an improved shower tray. It is an object of aspects of the present invention to address one or more of the above-mentioned or other problems.

### SUMMARY

According to the first aspect of the present invention, there is provided a composite article for use as a shower tray comprising a skin and a resin bonded filler matrix, wherein the resin bonded filler matrix comprises a thermoset resin in an amount of up to 10 wt% by total weight of the resin bonded filler matrix.

According to another aspect of the present invention, there is provided a method of making a composite article for use as a shower tray comprising the steps of:
a. optionally, forming a skin into a shape that defines a cavity for receiving a resin bonded filler matrix; and
b. arranging a resin bonded filler matrix into the cavity of the skin
wherein the resin bonded filler matrix comprises a thermoset resin or precursor thereof in an amount of up to 10% by total weight of the resin bonded filler matrix.

According to the present invention the composite article comprises a skin. The skin may comprise an upper portion that forms the upper surface of the composite article, for example, the upper portion of the skin may form the upper surface of the shower tray, on which the user stands in use. The skin may also comprise a skirt portion, suitably a skirt portion extending downwardly from the periphery of the upper portion.

The composite article, in use, is orientated so that the surface of the resin bonded filler matrix that is not covered the skin forms the base of the shower tray and is placed on the floor such that is inaccessible to the user, and the skin, suitably comprising an upper portion and optionally a skirt, provide the top side of the shower tray on which the user stands.

The skin may be a vacuum formed shaping. The skin may comprise a thermosetting polymer, such as an epoxy material and/or acrylic material. The skin may comprise an acrylic material, typically an ABS (acrylonitrile butadiene styrene) capped acrylic material.

The skin may be a gelcoat. The skin may comprise suitable gelcoat resin known in the art, typically, an epoxy gel-coat resin or a polyester gel-coat resin. The skin is typically scratch resistance, stain-resistant, non-slippery when wet and/or durable.

The skin, typically at least the upper portion of the skin, may have an average thickness of at least 1.0 mm, typically at least 1.5 mm, more typically at least 2.0 mm. The skin, typically at least the upper portion of the skin, may have an average thickness of up to 1.5 mm, more typically up to 2.0 mm, more typically up to 2.5 mm. The skin, typically at the upper portion of the skin may have a thickness from 1.0 mm to 2.5 mm, such as from 1.5 mm to 2.5 mm, such as from 2.0 mm to 2.5 mm, or a thickness from 1.0 mm to 2.0 mm, such as from 1.5 mm to 2.0 mm, or a thickness from 1.0 mm to 1.5 mm.

The skin may be in the form of a vacuum formed shaping, wherein, the skin, typically at the upper portion of the skin, prior to forming, may have an average thickness of at least 1.0 mm, typically at least 1.5 mm, more typically at least 2.0 mm. The skin may be in the form of a vacuum formed shaping, wherein the skin, typically the upper portion of the skin, prior to forming may have an average thickness of up to 1.5 mm, typically up to 2.0 mm, more typically up to 2.5 mm. The skin may be in the form of a vacuum formed shaping, wherein the skin, typically the upper portion of the skin, prior to forming may have a thickness from 1.0 mm to 2.5 mm, such as from 1.5 mm to 2.5 mm, such as from 2.0 mm to 2.5 mm, or a thickness from 1.0 mm to 2.0 mm, such as from 1.5 mm to 2.0 mm, or a thickness from 1.0 mm to 1.5 mm.

The skin may be in the form of a vacuum formed shaping, wherein the skin, typically the upper portion of the skin, after forming may have an average thickness of at least 0.5 mm, such as at least 1.0 mm, typically at least 1.5 mm, more typically at least 2.0 mm. The skin may be in the form of a vacuum formed shaping, wherein the skin, typically the upper portion of the skin after forming may have an average thickness of up to 1 mm, such as 1.5 mm, typically up to 2.0 mm, more typically up to 2.5 mm. The skin may be in the form of a vacuum formed shaping, wherein the skin, typically the upper portion of the skin, after forming may have a thickness from 0.5 to 2.5 mm, such as from 1.0 mm to 2.5 mm, such as from 1.5 mm to 2.5 mm or such as from 2.0 mm to 2.5 mm, or a thickness from 0.5 to 2.0 mm, such as from 1.0 mm to 2.0 mm, such as from 1.5 mm to 2.0 mm, or a thickness from 0.5 to 1.5 mm, such as from 1.0 mm to 1.5 mm, or a thickness from 0.5 to 1 mm. It is understood that the skin after forming has a reduced average thickness to the skin prior to forming.

The skin may comprise ABS and a further acrylic material. The skin may have a mass ratio of ABS to acrylic of at least 1:10, typically at least 1:5, more typically at least 1:2, even more typically at least 1:1, most typically at least 2:1, especially at least 5:1. The skin may have a mass ratio of ABS to acrylic of about 9:1.

The skin may comprise at least 5 wt% acrylic material, such as at least 8 wt% acrylic material, such as about 10 wt% based on the total weight of the skin. The skin may comprise at least 70 wt% ABS, such as at least 80 wt% ABS, such as about 90 wt% ABS based on the total weight of the skin. The skin may comprise up to 90 wt% ABS, such as up to 92 wt%, such as up to 95 wt% based on the total weight of the skin.

The shape of the skin may be produced by any appropriate method of forming a plastic sheet known in the art. Typically, the shape of the skin may be produced by vacuum moulding.

The shape of the skin may be produced by any appropriate method of forming a gel coating known in the art. Typically, the shape of the skin may be produced by first forming a gel coating on a mould.

According to the present invention the composite article comprises a resin bonded filler matrix.

The resin bonded filler matrix may be contained within a cavity that is defined by the skin, suitably defined by an upper portion and a skirt portion of the skin. It is understood that the resin bonded filler matrix contained within a cavity defined by the skin has an exposed surface which may form the underside of the composite article in use.

The resin bonded filler may matrix comprise a thermoset resin or precursor thereof in an amount of up to 10% of the total weight of the resin bonded filler matrix, typically, up to 9 wt%, more typically up to 8 wt%, most typically up to 7 wt%.

The resin bonded filler matrix may comprise a thermoset resin or precursor thereof in an amount of at least 1% of the total weight of the resin bonded filler matrix, typically at least 2 wt%, more typically at least 3 wt%, most typically at least 4 wt%.

The resin bonded filler matrix may comprise a thermoset resin or precursor thereof selected from one or more of the following: polyurethane resin, polyurethane resin precursor, polyester resin, polyester resin precursor.

In one embodiment the skin may be a gel coating and the resin bonded filler matrix may comprise a polyester resin and/or polyester resin precursor.

The thermoset resin or precursor thereof may act as a bonding agent between the other components of the resin bonded filler matrix.

The terms "precursor" and "precursor thereof" are terms well understood by those skilled in the art. For the avoidance of doubt a thermoset precursor includes precursors known to the skilled person that form a thermoset resin.

A polyurethane precursor may comprise an isocyanate and a polyol which react together to form a polyurethane resin. Suitably, any diisocyanate or triisocyanate and any diol, triol or polyols may be a polyurethane precursor. Examples of polyols include, but are not limited to, ethylene glycol, propylene glycol, and diethylene glycol. Examples of isocyanates include, but are not limited to, toluene diisocyanate (TDI) and methylene diphenyl diisocyanate, (MDI), 1,6-hexamethylene diisocyanate (HDI), 1-isocyanato-3-isocyanatomethyl-3,5,5-trimethylcyclohexane (isophorone diisocyanate, IPDI), and 4,4'-diisocyanato dicyclohexylmethane (H₁₂MDI or hydrogenated MDI).

A polyester precursor may include polyols and dibasic organic acids. such as polycarboxylic acids or anhydrides, which react together to form a polyester. Suitably, a dicarboxylic acid, tricarboxylic acid, polycarboxylic acid or anhydride and any diol, triol or polyols may be a polyester precursor. Examples of polyols include, but are not limited to, ethylene glycol, propylene glycol, and diethylene glycol. Examples of dibasic organic acids include, but are not limited to, phthalic acid, isophthalic acid, terephthalic acid, and maleic anhydride.

The thermoset resin or precursor thereof may include a catalyst to catalyse the reaction between at least one precursor to form a thermoset resin.

According to the present invention the resin bonded filler matrix may comprise a filler, typically an inorganic filler. The inorganic filler may be a low-density inorganic filler to reduce the total weight of the composite article.

The resin bonded filler matrix may comprise a thermoset resin or precursor thereof, and an inorganic filler. The inorganic filler may be substantially bonded together by the thermoset resin, such that at least 90 wt% of the inorganic filler is bonded together, such as at least 95 wt% of the inorganic filler is bonded together, such as at least 99 wt% of the filler is bonded together.

The resin bonded filler matrix may comprise an inorganic filler in an amount of up to 50% of the total weight of the resin bonded filler matrix, typically up to 75 wt%, more typically up to 90 wt%, such as up to 91 wt%, such as up to 92 wt%, such as up to 93 wt%, such as up to 94 wt%, such as up to 95 wt%, such as up to 96 wt%, such as up to 97 wt%, such as up to 99 wt%, or even up to 99 wt%.

The inorganic filler may comprise inorganic solid particles, typically inert inorganic solid particles. The inorganic filler may be a mineral filler, for example calcium carbonate.

The inorganic filler may be selected from silica sand, limestone, calcium carbonate, expanded or foamed clay, calcite, and/or recycled calcite, more typically calcite or recycled calcite, most typically a recycled calcite.

The inorganic filler may comprise substantially spherical particles, suitably substantially spherical and substantially smooth particles, such as spherical calcite.

The term "spherical" such as in "substantially spherical" is understood to mean a particle that has a sphericity of at least 0.7, typically at least 0.8, more typically at least 0.9, most typically about 1, as defined by Krumbein scale. The Krumbein scale is a system of measuring the sphericity of particles with a value of 0 being non-spherical and a value of 1 being a perfect sphere.

Without being bound by theory, a resin bonded filler matrix comprising a filler comprising smooth particles will have a lower surface area than a filler comprising rough (non-spherical) particles. This lower surface area reduces the surface interaction between the filler and thermoset resin or precursor thereof in the resin bonded filler matrix resulting in less thermoset resin or precursor thereof being required to bind the filler together in the resin bonded matrix. The inorganic filler may be a blended inorganic filler that comprises two or more inorganic fillers. The inorganic filler may comprise at least two inorganic fillers. Suitably, the inorganic filler may comprise a first inorganic filler and a second inorganic filler and optionally a further inorganic filler. Typically, the inorganic filler may comprise recycled calcium carbonate as a first inorganic filler and an expanded clay as a second inorganic filler, more typically, the first inorganic filler may comprise recycled calcium carbonate and the second inorganic filler may comprise expanded or foamed clay.

The inorganic filler may comprise at least 5% expanded or foamed clay based on the total weight of the inorganic filler, typically, at least 10wt%, more typically at least 15 wt%, most typically about 20 wt%. The inorganic filler may comprise up to 40 wt% expanded or foamed clay based on the total weight of the inorganic filler, typically, up to 35 wt%, more typically up to 30 wt%. Advantageously, foamed clay in the inorganic filler provides a low-density filler which reduces the total weight of the composite article.

The inorganic filler may comprise up to 90% of a first filler based on the total weight of the inorganic filler. The inorganic filler may comprise at least 50 wt% of a first filler based on the total weight of the inorganic filler.

The mass ratio of the first inorganic filler to the second inorganic filler may be at least 1:9, such as at least 1:7, such as at least 1:5, such as at least 1:3, such as at least 1:1, such as at least 3:1, such as at least 5:1, such as at least 7:1, such as at least 9:1. The mass ratio of the first inorganic filler to the second inorganic filler may be between 1:9 and 9:1, such as between 1:7 and 7:1, such as between 1:5 and 5:1, such as between 1:3 and 3:1.

The mass ratio of the first inorganic filler to the total mass of the second and further inorganic fillers may be at least 1:9, such as at least 1:7, such as at least 1:5, such as at least 1:3, such as at least 1:1, such as at least 3:1, such as at least 5:1, such as at least 7:1, such as at least 9:1. The mass ratio of the first inorganic filler to the total mass of the second and further inorganic fillers may be between 1:9 and 9:1, such as between 1:7 and 7:1, such as between 1:5 and 5:1, such as between 1:3 and 3:1.

The inorganic filler may have a D50 particle size distribution of up to 4mm, typically up to 3 mm, more typically up to 2 mm.

The inorganic filler may comprise particles with a D50 particle size of at least 0.1 mm, such as at least 0.2 mm, such as at least 0.5 mm, such as at least 0.75 mm, such as at least 1 mm, such as at least 1.5 mm, such as at least 2 mm, such as at least 3 mm, such as at least 4 mm, such as at least 5 mm. The inorganic filler may comprise particles with a D50 particle size of between 2 mm to 4 mm, such as between 2.5 mm to 3.5 mm or between 3 mm and 4 mm.

The inorganic filler may comprise a first inorganic filler and at least a second or further inorganic fillers, wherein the second and/or further inorganic fillers each may have a different D50 particle size. Suitably, the inorganic filler may comprise a first fraction and at least a second fraction wherein the first fraction and the at least second fraction may have different a D50 particle size.

The inorganic filler may comprise particles of a first inorganic filler with a D50 particles size of at least 0.1 mm, such as at least 0.2 mm, such as at least 0.5 mm, such as at least 0.75 mm, such as at least 1 mm, such as at least 1.5 mm, such as at least 2 mm, such as at least 3 mm, such as at least 4 mm, such as at least 5 mm. The inorganic filler may comprise particles of a first inorganic filler with D50 particle size of between 2 mm to 4 mm, such as between 2.5 mm to 3.5 mm or between 3 mm and 4 mm.

The inorganic filler may comprise particles of a second or further inorganic filler with a D50 particles size of at least 0.1 mm, such as at least 0.2 mm, such as at least 0.5 mm, such as at least 0.75 mm. The inorganic filler may comprise particles of a second or further inorganic filler with D50 particle size of between 0.1 mm to 2 mm, such as between 0.5 mm to 1.5 mm or between 0.75 mm and 1.25 mm.

Advantageously, an inorganic filler comprising larger particles results in a reduced amount of resin required to form the resin bonded filler matrix.

According to the present invention the composite article may further comprise an adhesive material, the adhesive material may be arranged between the skin and the resin bonded filler matrix.

In an embodiment of the invention, wherein the skin is a gel coat, the gel coat itself may be operable to act as the adhesive material in provide adhesion between the skin and the resin bonded filler matrix.

The adhesive material may be a resin material that is cured to provide adhesion between the skin and the resin bonded filler matrix.

The adhesive material may be a thermoset resin or precursor thereof, typically a foamed thermoset resin or precursor thereof.

The adhesive material may be applied to surface of the skin that contacts the resin bonded filler matrix. The adhesive material may be applied to the surface of the skin that faces into the cavity of the skin.

The adhesive material may have a substantially uniform thickness. Suitably, the adhesive material may be a uniform layer on the inner face of the skin.

The adhesive material may cover the skin with an average coverage of at least 25 g/m², such as at least 50 g/m², such as at least 75 g/m², such as at least 100 g/m²The adhesive material may cover the skin with an average coverage of up to 1 kg/m², such as up to 750 g/m², such as up to 500 g/m².

The adhesive material may have an average coverage of between 25-1,000 g/m², such as between 50-1,000 g/m², such as between 75-1,000 g/m², such as between 100-1,000 g/m². The adhesive material may have an average coverage of between 25-750 g/m², such as between 50-750 g/m², such as between 75-750 g/m², such as between 100-750 g/m². The adhesive material may have an average coverage of between 25-500 g/m², such as between 50-500 g/m², such as between 75-500 g/m², such as between 100-500 g/m².

The composite article may further comprise a metal mesh. The metal mesh, in combination with the skin, may form a complete shell around the resin bonded filler matrix. The metal mesh provides a large surface which not only physically supports the resin bonded filler matrix, but also provides tension to the resin bonded filler matrix, which surprisingly results in increased strength of the composite article. Advantageously, a metal mesh improves the strength of the composite article such that less thermoset resin is required in the resin bonded filler matrix to achieve the required strength for a composite article that is suitable for use as a shower tray, thereby providing a more environmentally friendly composite article.

The metal mesh may be a woven metal mesh, an expanded metal mesh, a knitted metal mesh, a welded metal mesh or an expanded metal mesh, typically, the metal mesh is a welded metal mesh.

The metal mesh may be formed from metal strands selected from one or more of stainless steel, copper, aluminium, titanium, nickel, brass, bronze and/or galvanised steel, typically, galvanised steel. The metal mesh may be a galvanised steel mesh. The metal mesh may be a wire mesh. The metal mesh may be a galvanised steel wire mesh.

The metal mesh may be at least partially embedded in the resin bonded filler matrix before the resin has set so that it is at least partially surrounded by the resin bonded filler matrix. The metal mesh may be entirely embedded in the resin bonded filler matrix before the resin has set so that it is completely surrounded by the resin bonded filler matrix. Advantageously, when the metal mesh is at least partially embedded in the resin bonded filler matrix, the resin bonded filler matrix has improved durability, including when weight is applied to composite structure in use, and the exposed surface of the resin bonded filler matrix (in other words, the underside of the composite article in use) is surprisingly resistant to cracking.

The metal mesh may be a uniform mesh, with regular repeating structure. The metal mesh may be formed from metal wire with a diameter of at least 1 mm, such as at least 1.5 mm, typically a diameter of about 1.6 mm.

The metal mesh may be embedded at least 2 mm from the exposed surface of the resin bonded filler matrix, such as at least 3 mm from the exposed surface of the resin bonded filler matrix. Typically, the metal mesh is embedded from 1 mm to 1 cm, such as from 2mm to 5 mm, such as from 2.5 mm to 4 mm.

The metal mesh may be at least partially embedded in the surface of the resin bonded filler matrix, for example wherein portions are partially embedded, and portions are entirely embedded in the resin bonded filler matrix.

The metal mesh may be at least 50% embedded in the resin bonded filler matrix such that the remaining 50% or less of the surface of the metal mesh is exposed through the exposed surface of the resin bonded filler matrix, for example at least 60%, such as at least 70%, at least 80% or at least 90% of the metal mesh may be embedded in the resin bonded filler matrix.

The metal mesh may be a metal mesh screen. The metal mesh may be a metal mesh grid. The metal mesh may be a metal mesh netting.

The metal mesh may be orientated in a plane substantially parallel to the underside of the resin bonded filler matrix. The metal mesh may be orientated in a plane substantially parallel to the underside of the composite article. It is understood that the underside of the composite article is the surface of the resin bonded matrix that is not in contact with the skin, typically in contact via an adhesive layer.

The metal mesh may be a single continuous metal mesh or formed of multiple metal mesh pieces.

The composite article may further comprise a capping portion. The capping portion may be configured to extend over the underside of the resin bonded filler matrix.

The capping portion may be a sheet. The capping portion may comprise at least one sheet. The sheet may be a woven sheet. The capping portion may be at least one woven sheet formed from natural fibres and/or glass fibres; and/or plastic.

The capping portion may be at least one woven sheet, such as a fabric sheet. The fabric may comprise a synthetic fabric, typically a synthetic woven fabric, more typically, a high-density polyethylene material or polyurethane material.

The capping portion may be at least one synthetic sheet, typically a plastic sheet. The capping portion may comprise an ABS sheet, in other words, a sheet comprising acrylonitrile butadiene styrene, typically, a sheet comprising at least 50 wt% acrylonitrile butadiene styrene. When the capping portion is a synthetic sheet, typically a plastic sheet, such as an ABS capping sheet, the capping portion further comprises an adhesive to a surface of the sheet to enhance adhesion to resin bonded filler matrix and optionally wire mesh.

The capping portion may comprise glass fibres. The capping portion may be a sheet that comprises fibreglass, in other words, a sheet comprising fibreglass, typically, a sheet comprising at least 50 wt% fibreglass. The capping portion may comprise chopped strand fibreglass, wherein optionally the chopped fibres have an average length of between 3 and 100 mm, such as between 3.5 and 100 mm, such as between 4 and 100 mm, such as between 4.5 and 100 mm. The chopped fibres may have an average length of between 3 and 75 mm, such as between 3.5 and 75 mm, such as between 4 and 75 mm, such as between 4.5 and 75 mm. The chopped fibres may have an average length of between 3 and 50 mm, such as between 3.5 and 50 mm, such as between 4 and 50 mm, such as between 4.5 and 50 mm. The chopped fibres may have an average length of between 3 and 30 mm, such as between 3.5 and 30 mm, such as between 4 and 30 mm, such as between 4.5 and 30 mm. The chopped fibres may have an average length of between 3 and 20 mm, such as between 3.5 and 20 mm, such as between 4 and 20 mm, such as between 4.5 and 20 mm. The chopped fibres may have an average length of between 4.5 and 10 mm. Typically, the chopped fibres have an average length of about 6 mm.

The capping portion may be porous. The capping portion may be attached to the resin bonded filler matrix, suitably attached by compression during production. The capping portion may be arranged in contact with the resin bonded filler matrix when the thermoset resin component is not fully set such that the thermoset resin bonds to the capping portion. In other words, the capping portion may be bonded to the resin bonded filler matrix.

In the present invention, a composite article for use as a shower tray is produced by a method comprising the steps of:
a. optionally, forming a skin into a shape that defines a cavity for receiving a resin bonded filler matrix; and
b. arranging a resin bonded filler matrix into the cavity of the skin.

The skin may be formed into a shape that defines a cavity by using vacuum forming, wherein suitably, a sheet is shaped around a mould using suction and thereby forms the skin.

The skin may be formed into a shape that defines a cavity by using a gel coat mould, wherein suitably, a resin is added as the first layer to a mould and thereby forms a gelcoat. The resin which forms the first layer thereby forms the outer layer of the finished part.

Typically, the cavity of the skin is at least partially filled with the resin bonded filler matrix and, optionally an adhesive material and/or fibres. The skin may comprise an upper portion and a skirt extending downwardly for the upper portion. The cavity may be an open-ended cavity, suitably the under face of the cavity is open.

The adhesive material may be added to a surface of the skin by a spraying means. Suitably, the adhesive material may be substantially evenly distributed across the inner surface of the skin.

The method for making a composite article may comprise a further step of at least partially embedding a metal mesh into the resin bonded filler matrix such that it is at least partially embedded in an exposed surface of the resin bonded filler matrix.

The method for making a composite article may comprise a further step of adding a capping portion. The at least partially filled cavity may be capped with a capping portion such that the skin and capping portion substantially fully encapsulate the resin bonded filler matrix and optionally, the partially exposed metal mesh.

The method for making a composite article may comprise a further step of compressing the resin bonded filler matrix, typically compressing the resin bonded filler matrix and adhesive material. Suitably, the at least partially filled cavity is compressed by applying a pressure to the resin bonded filler matrix.

The resin bonded filler matrix may be compressed by any suitable compression means that are known to the skilled person, typically, the resin bonded filler matrix is compressed using pinch rollers or a press.

The resin bonded filler matrix may be compressed at a suitable pressure, such as at least 10 MPa, such as at least 20 MPa, such as at least 30 MPa, such as at least 40 MPa. The resin bonded filler matrix may be compressed at a suitable pressure, such as ≤ 500 MPa, such as ≤ 250 MPa, such as ≤ 125 MPa, such as ≤ 75 MPa, such as ≤ 50 MPa.

The resin bonded filler matrix may be compressed at between 10 and 500 MPa, such as between 20 and 500 MPa, such as between 30 and 500 MPa, such as between 40 and 500 MPa. The resin bonded filler matrix may be compressed at between 10 and 250 MPa, such as between 20 and 250 MPa, such as between 30 and 250 MPa, such as between 40 and 250 MPa. The resin bonded filler matrix may be compressed at between 10 and 125 MPa, such as between 20 and 125 MPa, such as between 30 and 125 MPa, such as between 40 and 125 MPa. The resin bonded filler matrix may be compressed at between 10 and 75 MPa, such as between 20 and 75 MPa, such as between 30 and 75 MPa, such as between 40 and 75 MPa. The resin bonded filler matrix may be compressed at between 10 and 50 MPa, such as between 20 and 50 MPa, such as between 30 and 50 MPa, such as between 40 and 50 MPa.

The method for making a composite article may comprise a further step of using a pressure distributing member arranged between the composite article and the compression means. Such pressure distributing member may distribute they force applied by the compression such that the resin bonded filler matrix is evenly compressed. The pressure distributing member may be a solid planar board.

The capping portion may be arranged on the pressure distributing member such that when the pressure distributing member contacts the resin bonded filler matrix, the capping portion is transferred to the resin bonded filler matrix. The use of a capping portion can reduce the final weight of the composite article.

Advantageously, the composite articles of the present invention are made with a reduced amount of thermoset resin, and an increased amount of recycled filler compared to the composite articles of the prior art, whilst retaining comparable or improved physical properties such as strength and durability.

Advantageously, the composite articles of the present invention may comprise lightweight mineral fillers to reduce the weight further and/or further comprise a natural fibre or fibreglass layer to the underside of the tray to improve strength further and enhance the finish.

The invention is described herein with reference to shower trays for shower units, however, it is understood that the invention is not limited to shower trays and has applications in other composite articles for bathrooms and kitchens, such as sinks or baths.

It has surprisingly been found that a resin bonded filler matrix comprising a thermoset resin or a precursor thereof in an amount of up to 10% by total weight of the resin bonded filler matrix can be used to produce a composite article for use as a shower tray. Further, the use of the adhesive material in combination with the resin bonded filler matrix of the present invention provides a resin bonded filler matrix improved adhesion to the skin, while also retaining comparable strength and durability to a higher wt% resin-based fillers.

Advantageously, the composite articles of the present invention comprising a metal mesh, at least partially embedded within the resin bonded filler matrix, have increased strength and toughness. Additionally, the durability of the composite articles is also increased, and have increased fatigue resistance and impact resistance.

When the resin bonded filler matrix is compacted and pressed into the skin (suitably a vacuum forming), it maximises contact of the particles with the skin and enhances the strength and durability of the composite article. When a sheet of galvanised metal mesh is at least partially submerged into the lower side of the tray, the strength and durability of the composite article is surprisingly increased, and the back of the tray looks engineered which improves the user experience. The improvements to the strength and durability of the composite articles of the invention produce a composite article for use as a shower tray which contains around a third of the resin content of a current commercially available shower trays which significantly reducing the cost and VOC emissions.

As used herein, unless otherwise expressly specified, all numbers such as those expressing values, ranges, amounts or percentages may be read as if prefaced by the word "about", even if the term does not expressly appear. The term "about" when used herein means +/- 10% of the stated value. Also, the recitation of numerical ranges by endpoints includes all integer numbers and, where appropriate, fractions subsumed within that range (e.g., 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g., from 1.0 to 5.0 includes both 1.0 and 5.0). Also, any numerical range recited herein is intended to include all sub-ranges subsumed therein.

Singular encompasses plural and vice versa. For example, although reference is made herein to "an" adhesive material, "a" cavity and the like, one or more of each of these and any other components can be used.

The terms "comprising", "comprises" and "comprised of" as used herein are synonymous with "including", "includes" or "containing", "contains", and are inclusive or open-ended and do not exclude additional, non-recited members, elements or method steps. Additionally, although the present invention has been described in terms of "comprising", the articles detailed herein may also be described as "consisting essentially of" or "consisting of".

As used herein, the term "and/or," when used in a list of two or more items, means that any one of the listed items can be employed by itself or any combination of two or more of the listed items can be employed. For example, if a list is described as comprising group A, B, and/or C, the list can comprise A alone; B alone; C alone; A and B in combination; A and C in combination, B and C in combination; or A, B, and C in combination.

As used herein, the term "resin bonded filler matrix" is understood to refer to the mixture of a resin and filler which may be uncured, partially cured, curing, and/or cured. The final composite article may comprise a cured resin bonded filler matrix. The method to prepare the composite article may comprise fully curing the resin bonded filler matrix in the skin, after the optional step of compressing the uncured and/or partially cured resin bonded filler matrix into the skin. The method to prepare the composite article may comprise compressing the resin bonded filler matrix while it is curing. The method to prepare the composite article may comprise compressing a cured resin bonded filler matrix. The curing of the resin of the resin bonded filler matrix in the skin may improve adhesion to the skin and improve the strength and durability of the composite article.

All of the features contained herein may be combined with any of the above aspects in any combination.

For a better understanding of the invention, and to show how embodiments of the same may be carried into effect, reference will now be made, by way of example, to the following drawings.

### BRIEF DESCRIPTION OF DRAWINGS

Figure 1 shows a cross section view of a composite article according to the present invention.
Figure 2 shows a cross section view of the skin which delineates a cavity, which is to be filled to form the composite article of the present invention.
Figure 3 shows a cross section view of a composite article according to the present invention contained a capping portion.
Figure 4 shows a cross section view of a composite article according to the present invention containing a wire mesh.

### DESCRIPTION OF EMBODIMENTS

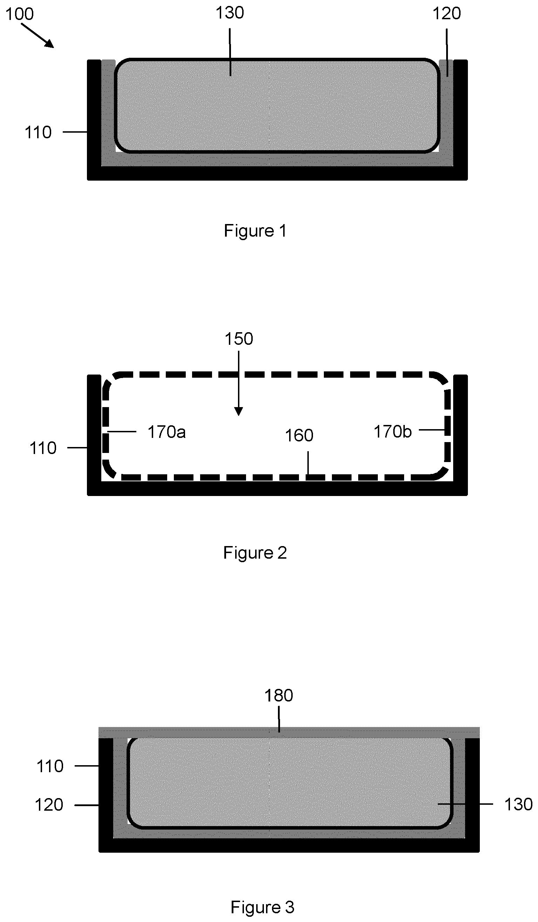

Figure 1 shows a composite article 100 according to the present invention. Composite article 100 is formed of skin 110, thermoset adhesive material 120 and resin bonded filler matrix 130. As shown in Figure 2, skin 110 is an open bottomed tray that delineates cavity 150. The upper surface 160 of skin 110 delineates the upper face of cavity 150 and skirt walls 170a and 170b delineate the side faces of cavity 150. The bottom face of cavity 150 is open.

Figure 3 shows composite article with capping portion 180 added to the composite article of Figure 1 to form a fully sealed composite article.

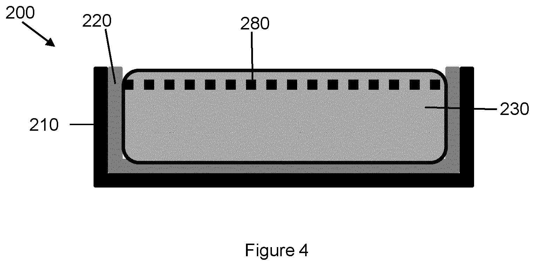

Figure 4 shows a composite article 200 according to the present invention formed of skin 210, adhesive material 220 and resin bonded filler matrix 230, with galvanised steel mesh 280 embedded into the resin bonded filler matrix 230. The galvanised steel mesh 290 embedded so that is it surrounded by the resin bonded filler matrix 230.

To produce the composite article 100 of Figure 1, unexpanded thermoset adhesive foam 120 was sprayed onto the upper and side faces of cavity 150 to form an adhesive layer. Resin bonded filler matrix 130 was then added into cavity 150 such that the cavity 150 mostly filled with resin bonded filler matrix 130. This filled skin 110 was then compressed by passing it through pinch rollers to form the completed composite article 100.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A composite article for use as a shower tray comprising:
a. a skin, and
b. a resin bonded filler matrix,
wherein the resin bonded filler matrix comprises a thermoset resin or precursor thereof in an amount of up to 10 wt% by total weight of the resin bonded filler matrix.

2. A composite article according to claim 1, further comprising a metal mesh, typically wherein the metal mesh is a woven metal mesh, an expanded metal mesh, a knitted metal mesh, or a welded metal mesh; and/or typically wherein the metal mesh is a uniform mesh with a regular repeating structure; and/or typically wherein the metal mesh is formed from metal wire with a diameter of at least 1 mm, such as at least 1.5 mm, or a diameter of about 1.6 mm.

3. A composite article according to claim 2, wherein the metal mesh is at least partially embedded in the resin bonded filler matrix; and/or wherein the metal mesh is orientated in a plane substantially parallel to the underside of the resin bonded filler matrix.

4. A composite article according to any preceding claim, wherein the skin comprises a thermosetting polymer, such as an epoxy material and/or acrylic material.

5. A composite article according to any preceding claim, wherein the skin comprises an upper portion that forms the upper surface of the composition article, and/or wherein the skin comprises a skirt portion extending downwardly from the periphery of the upper portion, and/or wherein the resin bonded filler matrix in contained within a cavity that is defined by the skin.

6. A composite article according to any preceding claim, wherein the composite article is obtainable by compressing the resin bonded filler matrix in the skin.

7. A composite article according to any preceding claim, wherein the resin bonded filler matrix comprises a thermoset resin or precursor thereof in an at least 1% of the total weight of the resin bonded filler matrix, typically at least 2 wt%, more typically at least 3 wt%, most typically at least 4 wt%, and/or in amount of up to 10% of the total weight of the resin bonded filler matrix, typically, up to 9 wt%, more typically up to 8 wt%, most typically up to 7 wt%.

8. A composite article according to any preceding claim, wherein the resin bonded filler matrix comprises a thermoset resin or precursor thereof selected from one or more of: polyurethane resin, polyurethane resin precursor, polyester resin, and/or polyester resin precursor, and/or wherein the resin bonded filler matrix comprises an inorganic filler, optionally the inorganic filler is selected from silica sand, limestone, calcium carbonate, expanded or foamed clay, calcite, and/or recycled calcite, more typically calcite or recycled calcite, most typically a recycled calcite.

9. A composite article according to any preceding claim, further comprising a capping portion, typically a sheet such as a woven sheet.

10. A method of producing a composite article for use as a shower tray comprising the steps of:
a. optionally, forming a skin into a shape that defines a cavity for receiving a resin bonded filler matrix; and
b. arranging a resin bonded filler matrix into the cavity of the skin.

11. A method according to claim 10, wherein the skin is formed into a shape that defines a cavity by using vacuum forming; and/or wherein the skin is formed into a shape that defines a cavity by using a gel coat mould, and wherein suitably, a resin is added as the first layer to a mould and thereby forms a gelcoat.

12. A method according to any of claims 10 or 11, wherein the cavity of the skin is at least partially filled with the resin bonded filler matrix and optionally an adhesive material and/or fibres, typically wherein the adhesive material is added to a surface of the skin by a spraying means and/or wherein the adhesive material is substantially evenly distributed across the inner surface of the skin.

13. A method according to any of claims 10 to 12, wherein the method comprises a further step of at least partially embedding a metal mesh into the resin bonded filler matrix; and/or comprises a further step, after step b., of compressing the resin bonded filler matrix, typically compressing the resin bonded filler matrix and adhesive material into the cavity of the skin, typically wherein the resin bonder filler matrix is compressed using pinch rollers or a press.

14. A method according to any of claims 10 to 13, wherein the composite article is the composite article of any of claims 1 to 9.

15. A composite article obtainable by, suitably obtained by, the method of claims 10 to 14.
